# EUROPÄISCHE PATENTSCHRIFT

(11) **EP 3 314 518 B1**
(45) Veröffentlichungstag und Bekanntmachung des Hinweises auf die Patenterteilung: **11.08.2021**
(21) Anmeldenummer: 16731804.7
(22) Anmeldetag: 22.06.2016
(51) Int. Cl.: G06F 21/62, H04W 4/60, H04W 8/18, H04W 12/08

(54) **SUBSKRIPTIONSVERWALTUNG MIT SUBSKRIPTIONSSPEZIFISCHEN PROFILEN ZUR EINSCHRÄKUNG DER FUNKTIONALITÄTEN DES SICHERHEITSELEMENTS**
SUBSCRIPTION MANAGEMENT COMPRISING SUBSCRIPTION-SPECIFIC PROFILES FOR RESTRICTING THE FUNCTIONALITIES OF THE SECURITY ELEMENT
GESTION DE SOUSCRIPTION PAR DES PROFILS SPÉCIFIQUES SOUSCRIPTIONS AFIN DE RESTREINDRE LES FONCTIONNALITÉS DE L'ÉLÉMENT DE SÉCURITÉ

(30) Priorität: 23.06.2015 DE 102015008117
(43) Veröffentlichungstag der Anmeldung: 02.05.2018
(73) Patentinhaber: Giesecke+Devrient Mobile Security GmbH, 81677 München (DE)
(72) Erfinder: NITSCH, Nils, 85570 Markt Schwaben (DE); SCHNELLINGER, Michael, 84032 Landshut (DE)
(74) Vertreter: Ter Meer Steinmeister & Partner
(86) Internationale Anmeldenummer: PCT/EP2016/001065
(87) Internationale Veröffentlichungsnummer: WO 2016/206806

(56) Entgegenhaltungen:
- DE-A1-102013 006 621
- US-A1- 2014 331 279
- Anonymous: "Metadaten - Wikipedia", , 16 May 2015 (2015-05-16), pages 1-7, XP055621814, Retrieved from the Internet: URL:https://de.wikipedia.org/w/index.php?t itle=Metadaten&oldid=142121865 [retrieved on 2019-09-12]

## Beschreibung

Die vorliegende Erfindung betrifft ein Verfahren zur Subskriptionsverwaltung. Genauer betrifft die Erfindung ein Verfahren zum Verwalten von Subskriptionen in einem Sicherheitselement für ein mobiles Endgerät.

Einer Subskription ist dabei jeweils ein Subskriptionsprofil zugeordnet. Ein solches Subskriptionsprofil ist dann, als Datensatz oder Applikation, in dem Sicherheitselement gespeichert. Das Subskriptionsprofil definiert Bedingungen, d.h. z.B. Art, Umfang und Kosten, einer Nutzung eines der Subskription zugeordneten Mobilfunknetzwerks mittels des Sicherheitselements und des mobilen Endgeräts, in welches das Sicherheitselement integriert ist.

Verschiedene Subskriptionen fragen in verschiedener Weise Funktionalitäten des Sicherheitselements nach, in welchem das der Subskription zugeordneten Subskriptionsprofil gespeichert ist. Eine "einfache" Subskription, welche beispielsweise lediglich einen Datentransfer gemäß einem vorgegebenen Maximalvolumen über das der Subskription zugeordnete Mobilfunknetzwerk erlaubt, benötigt sehr wenige Funktionalitäten des Sicherheitselements. Eine "umfangreiche" Subskription jedoch, welche es einem Nutzer beispielsweise erlaubt, praktisch sämtliche seitens des Mobilfunknetzwerks bereitgestellten Dienste (z.B. Mobilfunk, SMS, Internet) vollumfänglich zu nutzen, erfordert auch zahlreiche komplexe, seitens des Sicherheitselements bereitgestellte Funktionalitäten, beispielsweise kryptographische Funktionalitäten oder Zugriff auf ein Modul zur kontaktlosen Datenkommunikation (z.B. via NFC).

Die US 2014/0331279 A1 beschreibt Techniken zur Implementierung einer sicheren Betriebsumgebung für die Ausführung von Anwendungen auf einem Mobiltelefon. In einer UICC als sicherer Betriebsumgebung kann eine vertrauenswürdige Umgebung mit dedizierten Computerressourcen bereitgestellt werden, um die Sicherheit und Integrität der Verarbeitung und Daten für die Anwendungen zu verwalten. In der UICC können Sicherheitsrichtlinien gespeichert sein, die auf der Grundlage eines Sicherheitsprofils erstellt und entwickelt werden. Für Anwendungen kann ein Sicherheitsprofil gepflegt werden. Das Sicherheitsprofil kann basierend auf der Sensibilität der Daten für eine Anwendung, der Art einer Anwendung und/oder der Art der für die Anwendung angeforderten Sicherheitsdienste entwickelt werden.

Da ein Subskriptionsprofil bzw. innerhalb eines solchen Subskriptionsprofils ausführbare Applikationen in dem Sicherheitselement grundsätzlich sämtliche, im Rahmen einer Initialisierung des Sicherheitselements bereitgestellte Funktionalitäten des Sicherheitselements nutzen können, kann ein Zugriff einer Subskription auf eine für die Subskription nicht erforderliche Funktionalität nur dadurch beschränkt werden (z.B. aus Sicherheitsgründen), dass eine Initialisierung des Sicherheitselements auf eine auf das Sicherheitselement zu ladende Subskription abgestimmt wird. Dies ist zum einen aufwändig, da für verschiedene Subskriptionen jeweils verschiedene Initialisierungen eines Sicherheitselements erzeugt werden müssen. Zum anderen ist dies dann problematisch, wenn nachfolgend eine weitere Subskription auf das Sicherheitselement geladen werden soll, welche sich hinsichtlich des zum Betreiben der Subskription notwendigen Zugriffs auf Funktionalitäten des Sicherheitselements von der bereits geladenen Subskription unterscheidet.

Aufgabe der vorliegenden Erfindung ist es demnach, den vorstehend genannten Problemen Rechnung zu tragen.

Diese Aufgabe wird mittels eines Verfahrens, eines Sicherheitselements und eines Systems mit den Merkmalen der unabhängigen Ansprüche gelöst. Vorteilhafte Ausgestaltungen und Weiterbildungen sind in den abhängigen Ansprüchen angegeben.

Grundgedanke der vorliegenden Erfindung ist es, subskriptionsprofilspezifisch den Zugriff eines Subskriptionsprofils auf Funktionalitäten des Sicherheitselements zu beschränken. Mit anderen Worten umfasst ein Subskriptionsprofil selbst, nach einer geeigneten Modifikation, die Information darüber, welche Funktionalitäten des Sicherheitselements für das Subskriptionsprofil zugreifbar sind.

Gemäß einer bevorzugten Ausführungsform eines Verfahrens zur Subskriptionsverwaltung in einem Sicherheitselement für ein mobiles Endgerät, in welchem einer Subskription jeweils ein in dem Sicherheitselement gespeichertes oder speicherbares Subskriptionsprofil zugeordnet ist, wird ein Zugriff eines solchen Subskriptionsprofils auf grundsätzlich in dem Sicherheitselement verfügbare Funktionalitäten des Sicherheitselements subskriptionsspezifisch beschränkt. Mit anderen Worten wird ein Subskriptionsprofil derart spezifiziert oder modifiziert oder ergänzt, dass dadurch ein Zugriff des Subskriptionsprofils auf Funktionalitäten das Sicherheitselement angegeben, d.h. insbesondere auch beschränkt werden kann.

Dabei wird vorzugsweise subskriptionsprofilspezifisch ein Zugriff einer dem Subskriptionsprofil zugeordneten, in dem Sicherheitselement innerhalb eines Subskriptionsprofils ausführbaren Applikation auf Funktionalitäten des Sicherheitselements beschränkt.

Gemäß einer bevorzugten Ausführungsform sind die Funktionalitäten des Sicherheitselements durch Programmierschnittstellen des Sicherheitselements bereitgestellt, so dass die Beschränkung des Zugriffs auf die Funktio-nalitäten als Beschränkung des Zugriffs oder der Nutzungsmöglichkeit auf Programmierschnittstellen des Sicherheitselements verwirklicht ist.

Gemäß einer bevorzugten Ausführungsform werden für ein vorgegebenes Subskriptionsprofil das Subskriptionsprofil spezifizierende Metadaten erzeugt. Diese Metadaten können insbesondere als Header-Information erzeugt werden, welche, wenn das Subskriptionsprofil als ein Datensatz angesehen wird, als den Datensatz spezifizierende Anteile des Datensatzes vorliegen, in der Regel zu Beginn des Datensatzes.

Solche Metadaten können einerseits als Teil eines modifizierten Subskriptionsprofils oder als ein dem Subskriptionsprofil zugeordneter, zusätzlicher Datensatz, d.h. separat vom den Subskriptionsprofil, in dem Sicherheitselement gespeichert werden.

Diese das Subskriptionsprofil spezifizierenden Metadaten bezeichnen dann diejenigen Funktionalitäten des Sicherheitselements, auf welche das Subskriptionsprofil bzw. innerhalb des Subskriptionsprofils ausführbare Applikationen zugreifen können.

Alternativ oder zusätzlich können die Metadaten auch solche Funktionalitäten des Sicherheitselementes bezeichnen, welche seitens des Subskriptionsprofils nicht verwendet werden können, d.h. auf welche ein Zugriff durch das Subskriptionsprofil verwehrt wird.

Gemäß einer bevorzugten Variante bezeichnen die Metadaten diejenigen Programmierschnittstellen (API) des Sicherheitselements, auf welche das Subskriptionsprofil bzw. innerhalb des Subskriptionsprofils ausführbare Applikationen zugreifen (bzw. nicht zugreifen) können. Auf diese Weise werden somit indirekt diejenigen Funktionalitäten bezeichnet, auf welche das Subskriptionsprofil, über die bezeichnenden APIs, zugreifen (bzw. nicht zugreifen) kann.

Die Metadaten können dabei einerseits bereits vor dem Laden des Subskriptionsprofils in das Sicherheitselement erzeugt und dann zusammen mit dem Subskriptionsprofil in das Sicherheitselement geladen bzw. gespeichert werden.

Alternativ oder zusätzlich kann es ebenfalls vorgesehen sein, dass die Metadaten erst dann erzeugt und in das Sicherheitselement gespeichert bzw. in dem Sicherheitselement geändert werden, nachdem das Subskriptionsprofil bereits in das Sicherheitselement geladen worden ist. Eine solche nachträgliche Ergänzung bzw. Änderung der Metadaten kann beispielsweise über eine Luftschnittstelle erfolgen. Auf diese Weise kann ein Zugriff eines Subskriptionsprofils auf Funktionalitäten des Datenträgers nachträglich angepasst werden, wodurch beispielsweise auf eine Änderung der Subskription, d.h. eine Änderung oder Anpassungen der Bedingungen zur Nutzung des Mobilfunknetzwerks, flexibel reagiert werden kann.

In der Regel wird ein Hersteller oder ein Herausgeber des Sicherheitselements, in der Rolle eines Subskriptionsverwalters oder Subskriptionsmanagers, einen Zugriff eines spezifischen Subskriptionsprofils auf Funktionalitäten des Sicherheitselements in der beschriebenen Weise subskriptionsspezifisch beschränken. Mit anderen Worten obliegt es in der Regel dem Hersteller oder Herausgeber des Sicherheitselements, die vorstehend beschriebenen, das Subskriptionsprofil spezifizierenden Metadaten zu erzeugen und in dem Sicherheitselement zu speichern bzw. anzupassen. Ein Betreiber eines Mobilfunknetzwerks, welchem eine Subskription zugeordnet ist, ist in der Regel nicht befugt und technisch nicht in der Lage, einen Zugriff eines Subskriptionsprofils auf Funktionalitäten des Sicherheitselements anhand eines Subskriptionsprofils festzulegen oder zu beeinflussen.

Der wesentliche Vorteil des erfindungsgemäßen Konzepts, wonach subskriptionsprofilspezifisch ein Zugriff eines Subskriptionsprofils auf Funktionalitäten eines Sicherheitselements begrenzt werden kann, liegt darin, dass ein Hersteller eines Sicherheitselements das Sicherheitselement, unabhängig von den im Folgenden darauf zu ladenden Subskriptionen, standardisiert und in vollem Umfang initialisieren kann. Ein Zugriff der dann später auf das Sicherheitselement geladenen Subskriptionen auf einzelne Funktionalitäten des Sicherheitselements kann dann für jede Subskription subskriptionsspezifisch in der vorstehend beschriebenen Weise beschränkt werden.

Auf diese Weise wird es möglich, dass jede Subskription einen durch das Subskriptionsprofil vorgegebenen, begrenzten Zugriff auf Funktionalitäten des Sicherheitselements erhält, welcher von Subskription zu Subskription verschieden sein kann. Die Herstellung des Sicherheitselements wird dadurch vereinfacht, da dieses stets standardisiert initialisiert werden kann. Trotzdem kann für jede auf das Sicherheitselement - auch nachträglich - geladene Subskription spezifisch ein auf die Subskription zugeschnittener Zugriff auf Funktionalitäten des Sicherheitselements gewährleistet werden.

Eine bevorzugte Ausführungsform eines erfindungsgemäßen Sicherheitselements für ein mobiles Endgerät, in welchem Sicherheitselement zu zumindest einer Subskription ein Subskriptionsprofil gespeichert ist, zeichnet sich dadurch aus, dass subskriptionsprofilspezifisch ein Zugriff des Subskriptionsprofils auf Funktionalitäten des Sicherheitselements beschränkt ist.

Wie bereits angedeutet, können in dem Sicherheitselement zu einem in dem Sicherheitselement gespeicherten Subskriptionsprofil zusätzlich das Subskriptionsprofil spezifizierende Metadaten gespeichert sein. Diese Metadaten bezeichnen vorzugsweise positiv diejenigen Funktionalitäten oder diejenigen Programmierschnittstellen des Sicherheitselements, auf welche das Subskriptionsprofil zugreifen kann. Alternativ oder zusätzlich können die Metadaten auch diejenigen Funktionalitäten und/oder Programmierschnittstellen negativ bezeichnen, auf welche das Subskriptionsprofil nicht zugreifen kann.

Ein erfindungsgemäßes mobiles Endgerät umfasst ein vorstehend beschriebenes Sicherheitselement. Das Sicherheitselement kann dabei entfernbar in das Endgerät integriert werden, beispielsweise in Form einer SIM/UICC-Mobilfunkkarte, oder fest in das Endgerät eingebaut sein, z.B. als embedded-SIM/UICC.

Eine bevorzugte Ausführungsform eines erfindungsgemäßen Systems umfasst eine Subskriptionsverwaltungseinrichtung sowie zumindest ein Sicherheitselement für ein mobiles Endgerät der beschriebenen Art. Die Subskriptionsverwaltungseinrichtung ist dabei eingerichtet, ein Subskriptionsprofil, welches in dem Sicherheitselement gespeichert ist oder in dem Sicherheitselement speicherbar ist, derart zu spezifizieren, dass dadurch ein Zugriff des Subskriptionsprofils auf in dem Sicherheitselement vorliegende Funktionalitäten beschränkt wird.

Die Subskriptionsverwaltungseinrichtung ist vorzugsweise bei einem Hersteller oder einem Herausgeber des Sicherheitselements angeordnet. Ein Betreiber eines einer Subskription zugeordneten Mobilfunknetzwerks hat in der Regel organisatorisch und technisch keine Möglichkeit, über ein Subskriptionsprofil einen Zugriff des Subskriptionsprofils auf Funktionalitäten des Sicherheitselements zu beeinflussen.

Die Subskriptionsverwaltungseinrichtung ist bevorzugt eingerichtet, für ein vorgegebenes Subskriptionsprofil das Subskriptionsprofil spezifizierende Metadaten, insbesondere in Form von Header-Informationen oder dergleichen, zu erzeugen und als einen ergänzenden Anteil des Subskriptionsprofils oder zusätzlich zu dem Subskriptionsprofil in dem Sicherheitselement zu speichern. Diese Metadaten bezeichnen in der vorstehend bereits ausführlich beschriebenen Weise einen Zugriff des Subskriptionsprofils auf das Sicherheitselement.

Die Subskriptionsverwaltungseinrichtung ist schließlich eingerichtet, entsprechende, in dem Sicherheitselement gespeicherte Metadaten nachträglich zu verändern oder anzupassen. Allgemein ist die Subskriptionsverwaltungseinrichtung eingerichtet, ein in dem Sicherheitselement gespeichertes Subskriptionsprofil nachträglich dahingehend anzupassen, dass dadurch der Zugriff des Subskriptionsprofils auf Funktionalitäten des Sicherheitselements beschränkt wird.

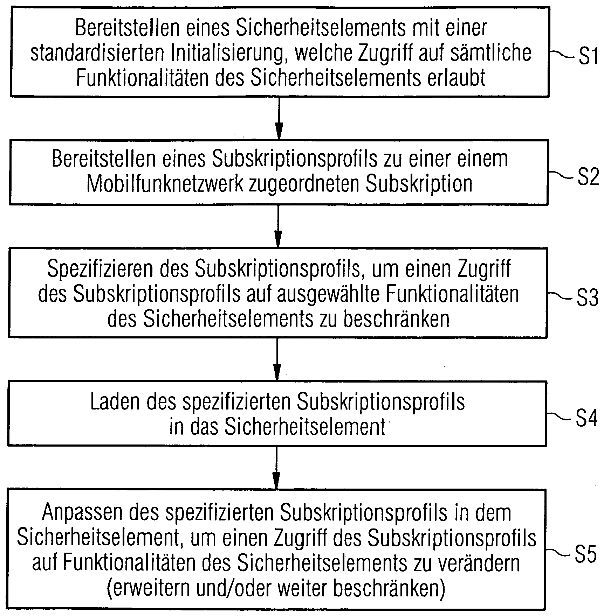

Die Erfindung wird im Folgenden mit Bezug auf die beiliegende Figur beispielhaft beschrieben. Diese gibt Schritte einer bevorzugten Ausführungsform eines Verfahrens zur Subskriptionsverwaltung in einem Sicherheitselement für ein mobiles Endgerät an.

In einem ersten Schritt S1 wird ein Sicherheitselement mit einer standardisierten Initialisierung bereitgestellt.

Diese Initialisierung erlaubt grundsätzlich Zugriff auf sämtliche Funktionalitäten des Sicherheitselements für ein Subskriptionsprofil, welches in das Sicherheitselement geladen werden kann.

Ein Sicherheitselement im Sinne der vorliegenden Erfindung ist insbesondere eine herkömmliche SIM/UICC- Mobilfunkkarte, eine embedded SIM/UICC, oder jedes andere Sicherheitselement, welches geeignet ist, ein Subskriptionsprofil für eine Subskription zur Nutzung eines Mobilfunknetzwerkes in gesicherter Weise zu speichern.

In einem zweiten Schritt S2 wird ein Subskriptionsprofil zu einer einem Mobilfunknetzwerk zugeordneten Subskription bereitgestellt. Ein solches Subskriptionsprofil definiert Bedingungen (Art, Umfang, Kosten, etc.) einer Nutzung von Diensten, welche durch ein der Subskription zugeordnetes Mobilfunknetzwerk bereitgestellt werden.

In Schritt S3 wird nun das Subskriptionsprofil spezifiziert. Auf diese Weise kann ein Zugriff des Subskriptionsprofils bzw. innerhalb des Subskriptionsprofils ausführbarer Applikationen auf ausgewählte Funktionalitäten des Sicherheitselements beschränkt werden.

Gemäß einer bevorzugten Variante erfolgt die Spezifikation des Subskriptionsprofils dadurch, dass zu dem Subskriptionsprofil Metadaten erzeugt werden, beispielsweise Header-Informationen, welche dem Subskriptionsprofil vorangestellt werden.

Nachfolgend wird exemplarisch eine mögliche Codierung eines derart spezifizierten Subskriptionsprofils in Form einer XML-Datei angegeben. Das eigentliche, ursprüngliche Subskriptionsprofil ist dabei lediglich knapp, in den letzten drei Zeilen ("profile data"), angedeutet. Der in dem Beispiel angegebene "ProfileHeader" entspricht den vorstehend beschriebenen Metadaten.

```
 <?ProfilePackageVersion = "1.0"?>
 <ProfileHeader MAC="AABBCCDDEEFF001122334455">
       <AllowedAPIs>
              <Aid Name="javacard.framework" Value=" A0 00 00 00
 62 01 01"></Aid> //All APIs available
  <Aid Name="javacard.security" Value=" A0 00 00 00 62 02 01">
        <SubFunctionality Name="DES"/> //DES ciphering allowed
  <SubFunctionality Name="RSA"/> //RSA ciphering allowed
        //AES and ECC forbidden
 </Aid>
 <Aid Name="org.globalplatform" Value=" A0 00 00 01 51
 00"></Aid> //All APIs available
        </ AllowedAPIs>
 </ ProfileHeader>
 <ProfileData>
        //Ciphered and MACed profile data
 </ProfileData>
```

Dem vorstehend gezeigten Beispiel kann beispielsweise entnommen werden, dass für das Subskriptionsprofil Programmierschnittstellen des Sicherheitselements positiv angegeben werden, auf welche das Subskriptionsprofil zugreifen kann. Dies sind im gezeigten Beispiel sämtliche APIs des "javacard.framework". Weiterhin sind einzelne Funktionalitäten aus dem Bereich "javacard.security" zugreifbar (z.B. Ver- und Entschlüsselung mittels RSA und DES), andere daraus sind nicht zugreifbar (z.B. Ver- und Entschlüsselung mittels AES und ECC).

Es versteht sich, dass das angegebene Beispiel lediglich exemplarisch zu verstehen ist und eine Implementation eines Header-Datensatzes auf andere Weise erfolgen kann.

Allgemein betreffen diejenigen Funktionalitäten, auf die ein Subskriptionsprofil zugreifen kann, und welche subskriptionsprofilspezifisch gemäß der vorliegenden Erfindung bezeichnet und dadurch beschränkt werden, solche Funktionalitäten, die durch ein Subskriptionsprofil oder durch eine innerhalb des Subskriptionsprofils ausgeführte Applikation als Hilfsfunktionalität aufgerufen werden können, wie beispielsweise kryptographische Funktionalitäten. Funktionalitäten des Sicherheitselements hingegen, welche auf eine Änderung des Sicherheitselements selbst oder auf eine Änderung der Funktionalität des Sicherheitselements gerichtet sind, sollen von der vorliegenden Erfindung in der Regel nicht umfasst sein.

In Schritt S4 kann dann ein derart spezifiziertes Subskriptionsprofil, d.h. insbesondere zusammen mit den zu dem Subskriptionsprofil erzeugten Metadaten, in das Sicherheitselement geladen bzw. gespeichert werden.

Während das Sicherheitselement bereits bestimmungsgemäß verwendet wird, das heißt in einen mobilem Endgerät integriert verwendet wird, kann, wie mit Bezug auf Schritt S5 dargestellt, eine Anpassung des spezifizierten Subskriptionsprofils in dem Sicherheitselement erfolgen. Dadurch kann ein Zugriff eines Subskriptionsprofils auf Funktionalitäten des Sicherheitselements nachträglich verändert werden. Eine solche Veränderung kann zum einen eine Erweiterung des Zugriffs, zum anderen eine weitere Beschränkung des Zugriffs bedeuten.

## Patentansprüche

1. Verfahren zur Subskriptionsverwaltung in einem in ein mobiles Endgerät integriertes Sicherheitselement,
- wobei das Sicherheitselement mit einer standardisierten Initialisierung bereitgestellt wird (S1),
- wobei diese standardisierte Initialisierung einen Zugriff auf alle Funktionalitäten des Sicherheitselements für ein Subskriptionsprofil erlaubt, wobei das Subskriptionsprofil in das Sicherheitselement geladen werden kann,
- wobei in dem Sicherheitselement zu einer Subskription jeweils ein Subskriptionsprofil zugeordnet ist (S2),
- wobei ein Subskriptionsprofil Bedingungen einer Nutzung eines der Subskription zugeordneten Mobilfunknetzwerks mittels des Sicherheitselements und des mobilen Endgeräts definiert,
- wobei subskriptionsprofilspezifisch ein Zugriff einer dem Subskriptionsprofil zugeordneten, in dem Sicherheitselement ausführbaren Applikation auf Funktionalitäten des Sicherheitselements beschränkt wird (S3),
- wobei Information darüber, welche Funktionalitäten des Sicherheitselements für das Subskriptionsprofil zugreifbar sind, in dem Subskriptionsprofil selbst umfasst ist, und
- wobei das Subskriptionsprofil mit den Informationen über die zugreifbaren Funktionalitäten in das Sicherheitselement geladen wird.

2. Verfahren nach Anspruch 1, wobei die Funktionalitäten des Sicherheitselements durch Programmierschnittstellen des Sicherheitselements bereitgestellt sind.

3. Verfahren nach einem der Ansprüche 1 bis 2, wobei für ein vorgegebenes Subskriptionsprofil zum Spezifizieren des Subskriptionsprofils Metadaten erzeugt werden, welche diejenigen Funktionalitäten, insbesondere Programmierschnittstellen nach Anspruch 2, des Sicherheitselements bezeichnen, auf welche das Subskriptionsprofil zugreifen kann.

4. Verfahren nach einem der Ansprüche 1 bis 3, wobei für ein vorgegebenes Subskriptionsprofil zum Spezifizieren des Subskriptionsprofils Metadaten erzeugt werden, welche diejenigen Funktionalitäten, insbesondere Programmierschnittstellen nach Anspruch 2, des Sicherheitselements bezeichnen, auf welche das Subskriptionsprofil nicht zugreifen kann.

5. Verfahren nach Anspruch 3 oder 4, wobei die Metadaten vor dem Laden des Subskriptionsprofils in das Sicherheitselement erzeugt werden (S3) oder dass die Metadaten erzeugt oder geändert werden (S5), nachdem das Subskriptionsprofil bereits in das Sicherheitselement geladen worden ist.

6. Verfahren nach einem der Ansprüche 1 bis 5, wobei ein Hersteller oder Herausgeber des Sicherheitselements den Zugriff eines Subskriptionsprofils auf Funktionalitäten des Sicherheitselements subskriptionsspezifisch beschränkt.

7. Sicherheitselement integriert in ein mobiles Endgerät,
- wobei das Sicherheitselement mit einer standardisierten Initialisierung bereitgestellt wird (S1),
- wobei diese standardisierte Initialisierung einen Zugriff auf alle Funktionalitäten des Sicherheitselements für ein Subskriptionsprofil erlaubt, wobei das Subskriptionsprofil in das Sicherheitselement geladen werden kann,
- wobei in dem Sicherheitselement zu zumindest einer Subskription ein Subskriptionsprofil gespeichert ist,
- wobei ein Subskriptionsprofil Bedingungen einer Nutzung eines der Subskription zugeordneten Mobilfunknetzwerks mittels des Sicherheitselements und des mobilen Endgeräts definiert,
- wobei subskriptionsprofilspezifisch ein Zugriff einer dem Subskriptionsprofil zugeordneten, in dem Sicherheitselement ausführbaren Applikation auf Funktionalitäten des Sicherheitselements beschränkt ist,
- wobei Information darüber, welche Funktionalitäten des Sicherheitselements für das Subskriptionsprofil zugreifbar sind, in dem Subskriptionsprofil selbst umfasst ist, und
- wobei das Subskriptionsprofil mit den Informationen über die zugreifbaren Funktionalitäten in das Sicherheitselement geladen wird.

8. Sicherheitselement nach Anspruch 7, wobei in dem Sicherheitselement zu einem in dem Sicherheitselement gespeicherten Subskriptionsprofil zusätzlich Metadaten gespeichert sind, welche diejenigen Funktionalitäten oder diejenigen Programmierschnittstellen des Sicherheitselements bezeichnen, auf welche das Subskriptionsprofil zugreifen kann, und/oder welche diejenigen Funktionalitäten oder diejenigen Programmierschnittstellen des Sicherheitselements bezeichnen, auf welche das Subskriptionsprofil nicht zugreifen kann.

9. Mobiles Endgerät mit einem Sicherheitselement nach einem der Ansprüche 7 oder 8.

10. System, umfassend eine Subskriptionsverwaltungseinrichtung sowie zumindest ein Sicherheitselement für ein mobiles Endgerät,
- wobei das Sicherheitselement mit einer standardisierten Initialisierung bereitgestellt wird (S1),
- wobei diese standardisierte Initialisierung einen Zugriff auf alle Funktionalitäten des Sicherheitselements für ein Subskriptionsprofil erlaubt, wobei das Subskriptionsprofil in das Sicherheitselement geladen werden kann,
- wobei in dem Sicherheitselement zu einer Subskription jeweils ein Subskriptionsprofil zugeordnet ist,
- wobei ein Subskriptionsprofil Bedingungen einer Nutzung eines der Subskription zugeordneten Mobilfunknetzwerks mittels des Sicherheitselements und des mobilen Endgeräts definiert,
- wobei die Subskriptionsverwaltungseinrichtung eingerichtet ist, ein Subskriptionsprofil derart zu spezifizieren, dass dadurch ein Zugriff einer dem Subskriptionsprofil zugeordneten, in dem Sicherheitselement ausführbaren Applikation auf Funktionalitäten des Sicherheitselements beschränkt wird,
- wobei Information darüber, welche Funktionalitäten des Sicherheitselements für das Subskriptionsprofil zugreifbar sind, in dem Subskriptionsprofil selbst umfasst ist, und
- wobei das Subskriptionsprofil mit den Informationen über die zugreifbaren Funktionalitäten in das Sicherheitselement geladen wird.

11. System nach Anspruch 10, wobei die Subskriptionsverwaltungseinrichtung eingerichtet ist, für ein vorgegebenes Subskriptionsprofil Metadaten zu erzeugen, welche diejenigen Funktionalitäten oder diejenigen Programmierschnittstellen des Sicherheitselements bezeichnen, auf welche das Subskriptionsprofil zugreifen kann, und/oder welche diejenigen Funktionalitäten oder diejenigen Programmierschnittstellen des Sicherheitselements bezeichnen, auf welche das Subskriptionsprofil nicht zugreifen kann.

12. System nach Anspruch 10 oder 11, wobei die Subskriptionsverwaltungseinrichtung eingerichtet ist, das spezifizierte Subskriptionsprofil in dem Sicherheitselement zu speichern und/oder ein bereits in dem Sicherheitselement gespeichertes Subskriptionsprofil zu verändern.

13. System nach einem der Ansprüche 10 bis 12, wobei die Subskriptionsverwaltungseinrichtung bei einem Hersteller oder Herausgeber des Sicherheitselements angeordnet ist.

## Claims

1. Method for subscription management in a security element integrated in a mobile terminal,
- wherein the security element is provided with a standardized initialization (S1),
- wherein this standardized initialization enables access to all functionalities of the security element for a subscription profile, wherein the subscription profile can be loaded into the security element,
- wherein one respective subscription profile is associated with one subscription in the security element (S2),
- wherein a subscription profile defines conditions of use of a mobile network associated with the subscription by means of the security element and the mobile terminal,
- wherein access, of an application associated with the subscription profile and executable in the security element, to functionalities of the security element is restricted in a subscription profile-specific manner (S3),
- wherein information about which functionalities of the security element are accessible to the subscription profile is included in the subscription profile itself, and
- wherein the subscription profile with the information about the accessible functionalities is loaded into the security element.

2. Method according to claim 1, wherein the functionalities of the security element are provided by programming interfaces of the security element.

3. Method according to any one of claims 1 to 2, wherein metadata is generated for a predetermined subscription profile for specifying the subscription profile, wherein the metadata designates those functionalities, in particular programming interfaces according to claim 2, of the security element which can be accessed by the subscription profile.

4. Method according to any one of claims 1 to 3, wherein metadata is generated for a predetermined subscription profile for specifying the subscription profile, wherein the metadata designates those functionalities, in particular programming interfaces according to claim 2, of the security element which cannot be accessed by the subscription profile.

5. Method according to claim 3 or 4, wherein
the metadata is generated before the subscription profile is loaded into the security element (S3) or that
the metadata is generated or modified (S5) after the subscription profile has already been loaded into the security element.

6. Method according to any one of claims 1 to 5, wherein a manufacturer or issuer of the security element restricts access of a subscription profile to functionalities of the security element in a subscription-specific manner.

7. Security element integrated into a mobile terminal,
- wherein the security element is provided with a standardized initialization (S1),
- wherein this standardized initialization enables access to all functionalities of the security element for a subscription profile, wherein the subscription profile can be loaded into the security element,
- wherein one respective subscription profile is associated with one subscription in the security element,
- wherein a subscription profile defines conditions of use of a mobile network associated with the subscription by means of the security element and the mobile terminal,
- wherein access, of an application associated with the subscription profile and executable in the security element, to functionalities of the security element is restricted in a subscription profile-specific manner,
- wherein information about which functionalities of the security element are accessible to the subscription profile is included in the subscription profile itself, and
- wherein the subscription profile with the information about the accessible functionalities is loaded into the security element.

8. Security element according to claim 7, wherein in addition to a subscription profile stored in the security element, metadata is stored in the security element which designates those functionalities or those programming interfaces of the security element which can be accessed by the subscription profile and/or which designates those functionalities or those programming interfaces of the security element which cannot be accessed by the subscription profile.

9. Mobile terminal with a security element according to one of claims 7 or 8.

10. System comprising a subscription management means and at least one security element for a mobile terminal,
- wherein the security element is provided with a standardized initialization (S1),
- wherein this standardized initialization enables access to all functionalities of the security element for a subscription profile, wherein the subscription profile can be loaded into the security element,
- wherein one respective subscription profile is associated with one subscription in the security element,
- wherein a subscription profile defines conditions of use of a mobile network associated with the subscription by means of the security element and the mobile terminal,
- wherein the subscription management means is configured to specify the subscription profile in that access, of an application associated with the subscription profile and executable in the security element, to functionalities of the security element is restricted in a subscription profile-specific manner,
- wherein information about which functionalities of the security element are accessible to the subscription profile is included in the subscription profile itself, and
- wherein the subscription profile with the information about the accessible functionalities is loaded into the security element.

11. System of claim 10, wherein the subscription management means is configured to generate, for a predetermined subscription profile, metadata which designates those functionalities or those programming interfaces of the security element which can be accessed by the subscription profile and/or which designates those functionalities or those programming interfaces of the security element which cannot be accessed by the subscription profile.

12. System according to claim 10 or 11, wherein the subscription management means is configured to store the specified subscription profile in the security element and/or to modify a subscription profile already stored in the security element.

13. System according to any one of claims 10 to 12, wherein the subscription management means is located at a manufacturer or issuer of the security element.

## Revendications

1. Procédé de gestion d'abonnements dans un élément de sécurité intégré dans un terminal mobile,
- dans lequel l'élément de sécurité est fourni avec une initialisation standardisée,
- dans lequel cette initialisation standardisée permet un accès à toutes les fonctionnalités de l'élément de sécurité pour un profil d'abonnement, dans lequel le profil d'abonnement peut être chargé dans l'élément de sécurité,
- dans lequel dans l'élément de sécurité, un profil d'abonnement est respectivement associé (S2) à un abonnement,
- dans lequel un profil d'abonnement définit des conditions d'utilisation d'un réseau de communication mobile associé à l'abonnement, au moyen de l'élément de sécurité et du terminal mobile,
- dans lequel un accès à une application exécutable dans l'élément de sécurité et associée au profil d'abonnement, est limité (S3) à des fonctionnalités de l'élément de sécurité, de manière spécifique au profil d'abonnement,
- dans lequel des informations concernant les fonctionnalités de l'élément de sécurité accessibles au profil d'abonnement sont elles-mêmes incluses dans le profil d'abonnement, et
- dans lequel le profil d'abonnement est chargé dans l'élément de sécurité avec les informations concernant les fonctionnalités accessibles.

2. Procédé selon la revendication 1, dans lequel les fonctionnalités de l'élément de sécurité sont fournies par des interfaces de programmation de l'élément de sécurité.

3. Procédé selon l'une des revendications 1 à 2, dans lequel pour un profil d'abonnement prédéfini, des métadonnées sont générées pour spécifier le profil d'abonnement, lesquelles métadonnées désignent les fonctionnalités de l'élément de sécurité, en particulier des interfaces de programmation selon la revendication 2, auxquelles le profil d'abonnement peut accéder.

4. Procédé selon l'une des revendications 1 à 3, dans lequel pour un profil d'abonnement prédéfini, des métadonnées sont générées pour spécifier le profil d'abonnement, lesquelles métadonnées désignent les fonctionnalités de l'élément de sécurité, en particulier des interfaces de programmation selon la revendication 2, auxquelles le profil d'abonnement ne peut pas accéder.

5. Procédé selon la revendication 3 ou 4, dans lequel
les métadonnées sont générées (S3) avant le chargement du profil d'abonnement dans l'élément de sécurité ou
les métadonnées sont générées ou modifiées (S5) après que le profil d'abonnement a déjà été chargé dans l'élément de sécurité.

6. Procédé selon l'une des revendications 1 à 5, dans lequel un fabricant ou un émetteur de l'élément de sécurité limite l'accès à un profil d'abonnement à des fonctionnalités de l'élément de sécurité de manière spécifique à l'abonnement.

7. Élément de sécurité intégré dans un terminal mobile,
- dans lequel l'élément de sécurité est fourni (S1) avec une initialisation standardisée,
- dans lequel cette initialisation standardisée permet un accès à toutes les fonctionnalités de l'élément de sécurité pour un profil d'abonnement, dans lequel le profil d'abonnement peut être chargé dans l'élément de sécurité,
- dans lequel dans l'élément de sécurité, un profil d'abonnement est mémorisé pour au moins un abonnement,
- dans lequel un profil d'abonnement définit des conditions d'utilisation d'un réseau de communication mobile associé à l'abonnement, au moyen de l'élément de sécurité et du terminal mobile,
- dans lequel un accès à une application exécutable dans l'élément de sécurité et associée au profil d'abonnement, est limité à des fonctionnalités de l'élément de sécurité, de manière spécifique au profil d'abonnement,
- dans lequel des informations concernant les fonctionnalités de l'élément de sécurité accessibles au profil d'abonnement sont elles-mêmes incluses dans le profil d'abonnement, et
- dans lequel le profil d'abonnement est chargé dans l'élément de sécurité avec les informations concernant les fonctionnalités accessibles.

8. Élément de sécurité selon la revendication 7, dans lequel dans l'élément de sécurité, des métadonnées sont de plus mémorisées pour un profil d'abonnement mémorisé dans l'élément de sécurité, lesquelles métadonnées désignent les fonctionnalités ou les interfaces de programmation de l'élément de sécurité auxquelles le profil d'abonnement peut accéder, et/ou les fonctionnalités ou les interfaces de programmation de l'élément de sécurité auxquelles le profit d'abonnement ne peut pas accéder.

9. Terminal mobile avec un élément de sécurité selon l'une des revendications 7 ou 8.

10. Système, comportant un dispositif de gestion d'abonnements ainsi qu'au moins un élément de sécurité pour un terminal mobile,
- dans lequel l'élément de sécurité est fourni (S1) avec une initialisation standardisée,
- dans lequel cette initialisation standardisée permet un accès à toutes les fonctionnalités de l'élément de sécurité pour un profil d'abonnement, dans lequel le profil d'abonnement peut être chargé dans l'élément de sécurité,
- dans lequel dans l'élément de sécurité, un profil d'abonnement est respectivement associé à un abonnement,
- dans lequel un profil d'abonnement définit des conditions d'utilisation d'un réseau de communication mobile associé à l'abonnement, au moyen de l'élément de sécurité et du terminal mobile,
- dans lequel le dispositif de gestion d'abonnements est configuré pour spécifier un profil d'abonnement, de sorte qu'un accès à une application exécutable dans l'élément de sécurité, associée au profil d'abonnement, est ainsi limité à des fonctionnalités de l'élément de sécurité,
- dans lequel des informations concernant les fonctionnalités de l'élément de sécurité accessibles au profil d'abonnement sont elles-mêmes incluses dans le profil d'abonnement, et
- dans lequel le profil d'abonnement est chargé dans l'élément de sécurité avec les informations concernant les fonctionnalités accessibles.

11. Système selon la revendication 10, dans lequel le dispositif de gestion d'abonnements est configuré pour générer des métadonnées pour un profil d'abonnement prédéfini, lesquelles métadonnées désignent les fonctionnalités ou les interfaces de programmation de l'élément de sécurité auxquelles le profil d'abonnement peut accéder, et/ou les fonctionnalités ou les interfaces de programmation de l'élément de sécurité auxquelles le profit d'abonnement ne peut pas accéder.

12. Système selon la revendication 10 ou 11, dans lequel le dispositif de gestion d'abonnements est configuré pour mémoriser le profil d'abonnement spécifié dans l'élément de sécurité et/ou pour changer un profil d'abonnement déjà mémorisé dans l'élément de sécurité.

13. Système selon l'une des revendications 10 à 12, dans lequel le dispositif de gestion d'abonnements est situé chez un fabricant ou un émetteur de l'élément de sécurité.
